# EUROPÄISCHE PATENTSCHRIFT

(11) **EP 2 153 936 B1**
(45) Veröffentlichungstag und Bekanntmachung des Hinweises auf die Patenterteilung: **25.01.2012**
(21) Anmeldenummer: 08014505.5
(22) Anmeldetag: 14.08.2008
(51) Int. Cl.: B23Q 17/22

(54) **Umrüstbare Maschine, insbesondere Bearbeitungsmaschine, und zugehöriges Verfahren**
Convertible machine, in particular processing machine, and corresponding method
Machine pouvant être rééquipée, en particulier machine de traitement et procédé correspondant

(43) Veröffentlichungstag der Anmeldung: 17.02.2010
(73) Patentinhaber: Homag Holzbearbeitungssysteme AG, 72296 Schopfloch (DE)
(72) Erfinder: Rathgeber, Peter, 72280 Dornstetten (DE)
(74) Vertreter: HOFFMANN EITLE

(56) Entgegenhaltungen:
- EP-A- 1 279 465
- EP-A- 1 674 201

## Beschreibung

### Technisches Gebiet

Die vorliegende Erfindung betrifft eine umrüstbare Maschine, insbesondere Bearbeitungsmaschine zur Bearbeitung von Werkstücken, welche vorzugsweise aus Holz, aus holzähnlichen Werkstoffen oder aus Kunststoffen bestehen, sowie ein zugehöriges Verfahren zum Umrüsten einer solchen Maschine.

### Stand der Technik

Maschinen, deren Bearbeitungseinheiten manuell umrüstbar (einstellbar) sind, sind in den verschiedensten Ausgestaltungen bekannt, beispielsweise als Bearbeitungsmaschinen für die Holzbearbeitung.

Eine Bearbeitungsmaschine dieser Art hat zumindest eine Bearbeitungseinheit zur Bearbeitung von Werkstücken. Jede Bearbeitungseinheit umfasst im Allgemeinen eine Aufnahme für ein Werkzeug, einen Antriebsmotor und ein Getriebe. Das in der Werkzeugaufnahme aufgenommene Werkzeug kann in verschiedenen Richtungen verfahrbar und in verschiedene Winkelstellungen verschwenkbar sein. Hierzu sind verschiedene Stellglieder vorgesehen, beispielsweise in Form von Stellspindeln. So kann eine erste Stellspindel vorgesehen sein, um die Bearbeitungseinheit über insgesamt auf einem Schlitten in der horizontalen Richtung zu verschieben; eine zweite Stellspindel, um die Bearbeitungseinheit insgesamt vertikal zu verschieben; und eine dritte Stellspindel, um die Winkelstellung der Werkzeugaufnahme zu verändern. Lage und Position der Bearbeitungseinheit können in diesem Fall also über drei Stellglieder verändert werden. Abhängig von den auszuführenden Arbeitsprozessen sind auch Ausgestaltungen von Bearbeitungseinheiten mit mehr als drei Stellspindeln denkbar, um die Bearbeitungseinheit zu verfahren und/oder das Werkzeug in verschiedenen Ebenen zu verschwenken.

Aufgrund der Einstellbarkeit der Bearbeitungseinheiten werden mit diesen Bearbeitungsmaschinen in verschiedenen Arbeitsprozessen Werkstücke mit verschiedenen Formaten bearbeitet. Beispielsweise kann erst eine gewisse Anzahl an Werkstücken mit einer Kantendicke von 1 mm bearbeitet werden, anschließend eine Anzahl an Werkstücken mit einer Kantendicke von 3 mm. Zu Beginn eines neuen Arbeitsprozesses muss die Bearbeitungsmaschine umgerüstet werden, d.h. die darin verwendeten Bearbeitungseinheiten mit ihren Werkzeugen müssen in die zu den veränderten Vorgaben passende Arbeitsstellung gebracht werden.

Die Umrüstung der Bearbeitungsmaschinen erfolgt dabei durch manuelles Einstellen der Stellspindeln. Dazu kann beispielsweise für jede Stellspindel ein entsprechendes Handrad vorgesehen sein, mittels dessen der Bediener die Einstellung der Stellspindel beeinflussen kann. Jede Stellspindel ist dazu mit einem mechanischen Nonius-Zählrad oder -Zählwerk ausgestattet, das die Ist-Einstellung der Stellspindel exakt anzeigt.

Zum Umrüsten der Bearbeitungsmaschine auf einen neuen Arbeitsprozess hat der Bediener nun die Aufgabe, zumindest einige der Stellspindeln über die Handräder zu verstellen, um Position und Winkelstellung der Bearbeitungseinheit an die neuen Vorgaben anzupassen. Dazu benötigt er Informationen über die Abmaße der in einem bestimmten Arbeitsprozess zu bearbeitenden Werkstücke, z.B. die Kantendicke. Diese Informationen hat der Bediener entweder auf einem Zettel notiert, oder er entnimmt sie der Anzeige eines zentralen Rechners. Aus den Informationen über die Abmaße der im neuen Arbeitsprozess zu bearbeitenden Werkstücke muss der Bediener nun ableiten, welche der mehreren an der Maschine vorhandenen Stellspindeln er überhaupt verstellen muss, und anschließend mittels der Handräder die Verstellung der entsprechenden Stellspindeln vornehmen. Dieser Vorgang ist recht fehleranfällig. Es kann nämlich leicht passieren, dass der Bediener beim Umrüsten eine Stellspindel falsch einstellt oder sogar vergisst, eine Stellspindel zu verstellen. Nach der Umrüstung müssen die ersten hergestellten Teile daher zunächst zeitaufwändig dahingehend überprüft werden, ob sie den Vorgaben entsprechen. Im schlimmsten Fall kann eine falsche Einstellung der Bearbeitungseinheit auch zur Zerstörung des Werkstücks und/oder des Werkzeugs führen.

Schwierigkeiten ergeben sich auch, wenn ein neues oder nachgeschärftes Werkzeug in die Bearbeitungsmaschine eingebaut wird, das andere Kennwerte hat als das zuvor verwendete, ggf. stumpf gewordene Werkzeug. Auch in diesem Fall ergibt sich die Notwendigkeit, die Einstellung bestimmter Stellspindeln zu verändern. Die korrekte Einstellung der Stellspindeln wird in diesem Fall oft durch Ausprobieren empirisch ermittelt und ggf. in den zentralen Rechner eingegeben.

Die EP 1 279 465 A1 offenbart eine Kehlmaschine sowie ein Verfahren zur Einstellung wenigstens einer der Spindeln der Kehlmaschine, bei der die Spindeln einer Kehlmaschine auf die Abmessungen des Werkstücks sowie auf das an diesem Werkstück herzustellende Profil eingestellt werden müssen. Die Profildaten und die gemessenen Werkzeugdaten sind in einem Speicher abgelegt. Aus den Daten werden durch ein Programm die Einstellwerte für die Spindeln zur Erzeugung des gewünschten Profils errechnet. Die Stellelemente sind mit Anzeigegeräten gekoppelt, welche die Positionen der Spindeln relativ zu einem maschinenseitigen Bezugspunkt anzeigen. Die Anzeigegeräte sind an einen Datenspeicher angeschlossen, in dem die Positionsdaten der Spindel abgelegt und aus dem sie abgerufen werden können.

Die EP 1 674 201 A1 betrifft eine Einstellvorrichtung zur Einstellung der Maße von durch Stellmitteln einstellbaren Elementen einer Bearbeitungsmaschine. Die Einstellvorrichtung weist eine Steuerung sowie ein Stellelement auf, wobei das Stellelement durch ein Verbindungselement auf das Stellmittel des Elementes einzuwirken vermag. Die Einstellvorrichtung ist über eine Schnittstelle mit einer Zentralsteuerung der Bearbeitungsmaschine verbunden und kann durch diese gesteuert werden.

### Darstellung der Erfindung

Der Erfindung liegt das technische Problem zugrunde, ein Verfahren und eine Vorrichtung zu schaffen, die eine weniger fehleranfällige Umrüstung der Maschine mit reduzierter Umrüstzeit ermöglichen.

Dieses technische Problem wird durch ein Verfahren mit den Merkmalen des Patentanspruchs 1 und eine Vorrichtung mit den Merkmalen des Patentanspruchs 6 gelöst.

Das erfindungsgemäße Verfahren dient zum Umrüsten einer Maschine, insbesondere einer Bearbeitungsmaschine zum Bearbeiten von Werkstücken, die bevorzugt zumindest teilweise aus Holz, Holzwerkstoffen oder Kunststoff bestehen. Die Maschine beinhaltet zumindest eine Bearbeitungseinheit mit zumindest einem manuell verstellbaren Stellglied. In dem Verfahren wird zunächst ein Soll-Wert der Stellung des Stellglieds von einem Hauptrechner an ein Anzeigefeld übermittelt. Dieser Soll-Wert sowie ein Ist-Wert der Stellung des Stellglieds werden auf dem Anzeigefeld angezeigt. Das Stellglied wird dann manuell verstellt, bis Ist- und Soll-Wert übereinstimmen.

Für jedes Stellglied wird somit ein Anzeigefeld vorgesehen, die mit dem Hauptrechner verbunden ist und jeweils über eine Soll- und eine Ist-Anzeige verfügt. Wenn nun Werkstücke mit veränderten Abmaßen bearbeitet werden sollen und die Bearbeitungsmaschine entsprechend umgerüstet werden muss, wird ein entsprechendes Progamm am Hauptrechner aufgerufen. Dieses Progamm bewirkt auch die Anzeige von Soll-Werten für jede Stellspindel an der entsprechenden Positionsanzeige. Der Bediener verstellt nun diejenigen Stellspindeln, bei denen der Ist-Wert nicht dem Soll-Wert entspricht.

Die für die (manuelle) Umrüstung der Bearbeitungsmaschine erforderlichen Informationen werden somit vom Hauptrechner an die einzelnen Positionsanzeigen übermittelt und dem Bediener als Soll-Werte angezeigt. Der Bediener muss somit nicht mehr selbst bestimmen, welche Stellspindeln für die Umrüstung der Maschine auf einen neuen Arbeitsprozess verstellt werden müssen und auf welche Werte sie eingestellt werden müssen, sondern diese Informationen werden ihm am Anzeigefeld vorgegeben. Der Bediener hat nur noch die Aufgabe, die entsprechenden Stellspindeln - beispielsweise per Handrad - zu verstellen, bis der angezeigte Ist-Wert dem vorgegebenen Soll-Wert entspricht.

Das erfindungsgemäße Verfahren entlastet den Bediener somit durch Vorgabe der Soll-Werte für die zu verstellenden Stellspindeln. Eine Fehlbedienung durch falsche Verstellung der Stellspindeln, die zum Werkzeug- oder Werkstückbruch führen kann, ist ausgeschlossen. Darüber hinaus bietet das Verfahren eine spürbare Zeitersparnis beim manuellen Umrüsten von Maschinen, was insbesondere bei Werkstücken mit kleinen Losgrößen oder Einzelstücken wichtig ist.

Die Ausgestaltung und Positionierung des Anzeigefelds für die Ist- und Soll-Werte ist im Grunde frei wählbar. Beispielsweise können verschiedene Anzeigefelder für die verschiedenen Stellglieder vorgesehen werden, oder es werden zumindest die Soll-Werte für alle Stellglieder auf einem gemeinsamen Anzeigefeld angezeigt. Alternativ wäre es beispielsweise möglich, zumindest die Soll-Werte auf einem Handheld-Gerät anzuzeigen.

Bevorzugte optionale Merkmale sind in den abhängigen Patentansprüchen beschrieben.

Die Umrüstung der Bearbeitungsmaschine kann noch leichter und sicherer durchgeführt werden, wenn ein Signal ausgegeben wird, wenn bzw. solange der Ist-Wert der Stellung des Stellglieds nicht dem Soll-Wert entspricht. Beispielsweise wäre es denkbar, für das Anzeigefeld eine Signallampe vorzusehen, die aufleuchtet, solange das Stellglied noch nicht in die vorgegebene Stellung verstellt worden ist. Hierzu muss der Ist-Wert der Stellglieder in an sich bekannter Art und Weise elektronisch erfasst und an den Hauptrechner übermittelt werden. Der Vergleich zwischen Sollund Ist-Wert erfolgt dann im Hauptrechner, der das Signal im Anzeigefeld entsprechend beeinflusst.

Der Bediener kann den erfolgreichen Abschluss der Umrüstung dann einfach dadurch erkennen, dass keine Signallampe mehr aufleuchtet. Anstelle der Signallampe könnte auch ein anderes visuelles Signal vorgesehen werden, beispielsweise Blinken des Soll-Werts oder Darstellen des Soll-Werts in einer Signalfarbe, bis der Ist-Wert dem Soll-Wert entspricht. Auch ein akustisches Signal ist grundsätzlich denkbar.

Im erfindungsgemäßen Verfahren wird die Maschine erst dann für den Betrieb freigegeben, wenn der Ist-Wert der Stellung des Stellglieds dem Soll-Wert entspricht. Eine Sperre ist vorgesehen , die das Einführen von Werkstücken in die Maschine hinein verhindert, bis die Maschine umgerüstet worden ist und alle Stellglieder an den neuen Arbeitsprozess angepasst worden sind. So kann ausgeschlossen werden, dass ein Werkstück mit einer fehlerhaft eingestellten Bearbeitungseinheit bearbeitet wird.

Die Übermittlung der Soll-Werte vom Hauptrechner an das Anzeigefeld kann über eine drahtlose oder eine verkabelte Verbindung erfolgen. Gleiches gilt auch für eine eventuelle Übermittlung der Ist-Werte an den Hauptrechner.

Schließlich ist es von Vorteil, wenn bei der Vorgabe der Soll-Werte durch den Hauptrechner auch Informationen über ein in der Bearbeitungseinheit vorgesehenes Werkzeug berücksichtigt werden. Im Hauptrechner sind hierzu Informationen über die zum Einsatz kommenden Werkzeuge hinterlegt. Wird nun ein Werkzeug neu eingewechselt, nachdem es z.B. nachgeschliffen worden ist und somit neue Geometriedaten erhalten hat, kann der Hauptrechner die entsprechenden Informationen bei der Vorgabe der Soll-Werte für die Einstellung der Stellglieder berücksichtigen.

Die umrüstbare Maschine gemäß der vorliegenden Erfindung ist insbesondere eine Bearbeitungsmaschine zum Bearbeiten von Werkstücken, die bevorzugt zumindest teilweise aus Holz, Holzwerkstoffen oder Kunststoff bestehen. Die Maschine weist zumindest eine Bearbeitungseinheit mit zumindest einem manuell verstellbaren Stellglied auf. Ein Anzeigefeld ist vorgesehen, um einen Soll- und einen Ist-Wert der Stellung des Stellglieds anzuzeigen. Außerdem sind Mittel zum Übermitteln eines Soll-Werts der Stellung des Stellglieds von einem Hauptrechner an das Anzeigefeld vorhanden. Das Stellglied ist manuell verstellbar, bis Ist- und Soll-Wert übereinstimmen.

Bevorzugte optionale Merkmale der erfindungsgemäßen Maschine sind in den zugehörigen abhängigen Patentansprüchen beschrieben.

### Kurze Beschreibung der Zeichnung

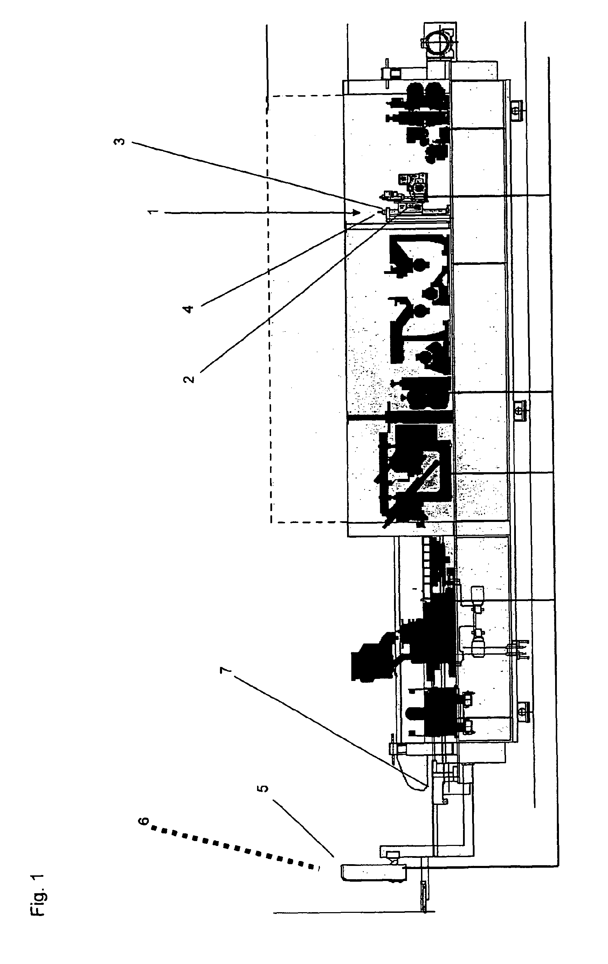

- Fig. 1: zeigt eine erfindungsgemäße, umrüstbare Bearbeitungsmaschine.

### Ausführliche Beschreibung einer bevorzugten Ausführungsform der Erfindung

Im folgenden werden eine bevorzugte Ausführungsform einer bevorzugt manuell umrüstbaren Bearbeitungsmaschine gemäß der vorliegenden Erfindung sowie die einzelnen Schritte einer bevorzugten Ausführungsform des erfindungsgemäßen Verfahrens zum bevorzugt manuellen Umrüsten einer solchen Bearbeitungsmaschine im Detail beschrieben.

Fig. 1 zeigt die umrüstbare Bearbeitungsmaschine, die in der vorliegenden Ausführungsform als Durchlaufmaschine ausgestaltet ist, obgleich die Erfindung auch auf Stationärmaschinen oder Kombinationen hiervon anwendbar ist. Die Bearbeitungsmaschine ist in an sich bekannter Art und Weise ausgestaltet und umfasst beispielsweise Transporteinrichtungen für Werkstücke sowie verschiedene Bearbeitungseinheiten. Auf eine dieser Bearbeitungseinheiten, die in Fig. 1 mit der Bezugsziffer 1 bezeichnet ist, wird im folgenden genauer eingegangen. Die Bearbeitungseinheit umfasst ein Stellglied 2, mittels dessen ein in der Bearbeitungseinheit verwendetes Werkzeug in einer bestimmten Richtung verfahren werden kann. Dieses Stellglied ist über eine manuelle Verstellung 4 verstellbar. Ein Anzeigefeld 3 ist an der Bearbeitungseinheit vorgesehen und zeigt einen Soll- und einen Ist-Wert der Stellung des Stellglieds 2 an.

Die Bearbeitungsmaschine ist mit einem Hauptrechner 5 gekoppelt. Dies geschieht in der vorliegenden Ausführungsform über eine drahtlose Verbindung 6; es kann aber auch eine verkabelte Verbindung vorgesehen werden. In diesem Hauptrechner 5 sind Informationen über die verschiedenen abzuarbeitenden Arbeitsprozesse gespeichert, d.h. wie viele Werkstücke mit welchen Abmaßen in welcher Art und Weise bearbeitet werden müssen. Zu jedem Arbeitsprozess speichert der Hauptrechner 5 entsprechende Einstellinformationen für alle in der Bearbeitungsmaschine zum Einsatz kommenden Stellglieder.

Zu Beginn eines neuen Arbeitsprozesses gibt der Hauptrechner 5 die Einstellinformation als Soll-Wert an das Anzeigefeld 3 des Stellglieds 2 aus. Dabei zeigt das Anzeigefeld 3 stets sowohl den Soll- als auch den Ist-Wert der Stellung des Stellglieds 2 an, so dass der Bediener diese Werte unmittelbar vergleichen kann. Am Anzeigefeld 3 ist auch eine Signallampe vorgesehen, die aufleuchtet, solange der Soll-Wert nicht dem Ist-Wert entspricht.

Der Bediener hat nun die Aufgabe, das Stellglied 2 so einzustellen, dass der Ist-Wert dem Soll-Wert entspricht. Hierzu wird der Ist-Wert des Stellglieds 2 elektronisch erfasst und an den Hauptrechner 5 übermittelt, welcher den für den neuen Arbeitsprozess vorgegebenen Soll-Wert mit dem erfassten Ist-Wert vergleicht und die Signallampe am Anzeigefeld 3 entsprechend ansteuert.

Dieser Vorgang wird für alle in der Bearbeitungsmaschine vorhandenen Stellglieder wiederholt, die zur Umrüstung der Maschine auf den neuen Arbeitsprozess verstellt werden müssen.

Falls die Stellglieder in einer bestimmten Reihenfolge für den neuen Arbeitsprozess verstellt werden müssen, kann diese Reihenfolge ebenfalls vom Hauptrechner 5 vorgegeben werden. Dies geschieht beispielsweise dadurch, dass der Hauptrechner 5 nur den Soll-Wert des als nächstes einzustellenden Stellglieds am entsprechenden Anzeigefeld anzeigt oder diesen zumindest durch Blinken oder Ausgeben eines anderweitigen Signals hervorhebt.

Im Hauptrechner 5 sind andererseits auch Informationen über die zum Einsatz kommenden Werkzeuge hinterlegt. Hierzu kann beispielsweise jedes Werkzeug eine Identifikationsnummer erhalten, um es eindeutig zuordnen zu können. Der Hauptrechner 5 speichert unter dieser Identifikationsnummer alle relevanten Daten des Werkzeugs. Wird nun ein Werkzeug neu eingewechselt, nachdem es z.B. nachgeschliffen worden ist und somit neue Geometriedaten erhalten hat, kann der Hauptrechner 5 über die Identifikationsnummer des Werkzeugs auf die hinterlegten Daten zugreifen und diese bei der Vorgabe der Soll-Werte berücksichtigen.

Sind alle Stellglieder korrekt für den neuen Arbeitsprozess verstellt worden, wird dem Bediener dies durch Erlöschen der Lampen an den Anzeigefeldern kenntlich gemacht. Gleichzeitig wird die Bearbeitungsmaschine für die Bearbeitung der Werkstücke im neuen Arbeitsprozess freigegeben. In der vorliegenden Ausführungsform der Bearbeitungsmaschine ist zu diesem Zweck eine Einlaufsperre 7 vorgesehen, die das Einlaufen von Werkstücken in die Bearbeitungsmaschine hinein verhindert, solange die Maschine noch nicht vollständig umgerüstet worden ist. Eine Bearbeitung der Werkstücke kann somit nur nach erfolgter korrekter Umrüstung der Maschine erfolgen.

## Patentansprüche

1. Verfahren zum Umrüsten einer Maschine, insbesondere einer Bearbeitungsmaschine zum Bearbeiten von Werkstücken, die bevorzugt zumindest teilweise aus Holz, Holzwerkstoffen oder Kunststoff bestehen,
wobei die Maschine zumindest eine Bearbeitungseinheit (1) mit zumindest einem manuell verstellbaren Stellglied (2) beinhaltet, und
wobei das Verfahren folgende Schritte aufweist:
- Übermitteln eines Soll-Werts der Stellung des Stellglieds (2) von einem Hauptrechner (5) an ein Anzeigefeld (3),
- Anzeigen dieses Soll-Werts sowie eines Ist-Werts der Stellung des Stellglieds (2) auf dem Anzeigefeld (3), und
- manuelles Verstellen des Stellglieds (2), bis Ist-und Soll-Wert übereinstimmen,
**dadurch gekennzeichnet, dass**
das Einführen von Werkstücken in die Maschine hinein durch eine Spene verhindert wird und die Maschine erst dann für den Betrieb freigegeben wird, wenn der Ist-Wert der Stellung des Stellglieds (2) dem Soll-Wert entspricht.

2. Verfahren zum Umrüsten einer Maschine nach Patentanspruch 1, bei welchem ein Signal ausgegeben wird, wenn der Ist-Wert der Stellung des Stellglieds (2) nicht dem Soll-Wert entspricht.

3. Verfahren zum Umrüsten einer Maschine nach einem der Patentansprüche 1 oder 2, bei welchem der Soll-Wert über eine drahtlose Verbindung (6) vom Hauptrechner (5) an das Anzeigefeld (3) übermittelt wird.

4. Verfahren zum Umrüsten einer Maschine nach einem der Patentansprüche 1 bis 3, wobei die Maschine mehrere Stellglieder (2) mit zugehörigen Anzeigefeldern (3) aufweist, und wobei zum Umrüsten der Maschine die Soll-Werte für die Stellglieder (2) an die jeweiligen Anzeigefelder (3) übermittelt und dort angezeigt werden.

5. Verfahren zum Umrüsten einer Maschine nach einem der Patentansprüche 1 bis 4, wobei auch Informationen über ein in der Bearbeitungseinheit (1) vorgesehenes Werkzeug bei der Vorgabe der Soll-Werte durch den Hauptrechner (5) berücksichtigt werden.

6. Umrüstbare Maschine, insbesondere Bearbeitungsmaschine zum Bearbeiten von Werkstücken, die bevorzugt zumindest teilweise aus Holz, Holzwerkstoffen oder Kunststoff bestehen, wobei
die Maschine zumindest eine Bearbeitungseinheit (1) mit zumindest einem manuell verstellbaren Stellglied (2) aufweist,
ein Anzeigefeld (3) vorgesehen ist, um einen Soll-und einen Ist-Wert der Stellung des Stellglieds (2) anzuzeigen,
außerdem Mittel (6) zum Übermitteln eines Soll-Werts der Stellung des Stellglieds (2) von einem Hauptrechner (5) an das Anzeigefeld (3) vorhanden sind, und
die Bearbeitungseinheit eine manuelle Verstellung (4) für das Stellglied (2) aufweist, mittels derer das Stellglied (2) verstellbar ist, bis Ist- und Soll-Wert übereinstimmen,
**gekennzeichnet durch**
eine Sperre (7) zum Verhindern des Einführens von Werkstücken in die Maschine hinein und Mittel zum Freigeben der Maschine für den Betrieb, wenn der Ist-Wert der Stellung des Stellglieds (2) dem Soll-Wert entspricht.

7. Umrüstbare Maschine nach Patentanspruch 6, weiter mit Mitteln zum Ausgeben eines Signals, wenn der Ist-Wert der Stellung des Stellglieds (2) nicht dem Soll-Wert entspricht.

8. Umrüstbare Maschine nach einem der Patentansprüche 6 oder 7, die über eine drahtlose Verbindung (6) zwischen Hauptrechner (5) und Anzeigefeld (3) zum Übermitteln des Soll-Werts verfügt.

9. Umrüstbare Maschine nach einem der Patentansprüche 6 bis 8, die mehrere Stellglieder (2) mit zugehörigen Anzeigefeldern (3) aufweist und zum Umrüsten der Maschine die Soll-Werte für die Stellglieder (2) an die jeweiligen Anzeigefelder (3) übermittelt und dort anzeigt.

## Claims

1. Method for adapting a machine, in particular a processing machine, for processing workpieces which preferably consist at least partly of wood, derived timber products or plastic, wherein the machine contains at least one processing unit (1) having at least one manually adjustable actuator (2), and wherein the method has the following steps:
- transmitting a theoretical value of the position of the actuator (2) from a host computer (5) to a display panel (3),
- displaying this theoretical value and an actual value of the position of the actuator (2) on the display panel (3), and
- manual adjustment of the actuator (2) until actual value and theoretical value agree,
**characterised in that** the introduction of workpieces into the machine is prevented by a barrier and the machine is only released for operation when the actual value of the position of the actuator (3) corresponds to the theoretical value.

2. Method for adapting a machine according to patent claim 1, in which a signal is emitted when the actual value of the position of the actuator (2) does not correspond to the theoretical value.

3. Method for adapting a machine according to one of patent claims 1 or 2, in which the theoretical value is transmitted from the host computer (5) to the display panel (3) via a wireless connection (6).

4. Method for adapting a machine according to one of patent claims 1 to 3, wherein the machine has several actuators (2) with associated display panels (3), and wherein to adapt the machine, the theoretical values for the actuators (2) are transmitted to the particular display panels (3) and displayed there.

5. Method for adapting a machine according to one of patent claims 1 to 4, wherein information about a tool provided in the processing unit (1) is also taken into account by the host computer (5) when presetting the theoretical values.

6. Adaptable machine, in particular processing machine, for processing workpieces which preferably consist at least partly of wood, derived timber products or plastic, wherein the machine has at least one processing unit (1) having at least one manually adjustable actuator (2), a display panel (3) is provided to display a theoretical value and an actual value of the position of the actuator (2), in addition means (6) are present to transmit a theoretical value of the position of the actuator (2) from a host computer (5) to the display panel (3), and the processing unit has manual adjustment (4) for the actuator (2), by means of which the actuator (2) can be adjusted until actual value and theoretical value agree, **characterised by** a barrier (7) to prevent the introduction of workpieces into the machine and means for releasing the machine for operation when the actual value of the position of the actuator (2) corresponds to the theoretical value.

7. Adaptable machine according to patent claim 6, further having means for emitting a signal when the actual value of the position of the actuator (2) does not correspond to the theoretical value.

8. Adaptable machine according to one of patent claims 6 or 7, which has a wireless connection (6) between host computer (5) and display panel (3) to transmit the theoretical value.

9. Adaptable machine according to one of patent claims 6 to 8, which has several actuators (2) with associated display panels (3) and to adapt the machine, transmits the theoretical values for the actuators (2) to the particular display panels (3) and displays them there.

## Revendications

1. Procédé pour adapter une machine, notamment une machine-outil destinée à l'usinage de pièces qui sont de préférence au moins en partie en bois, en matériaux dérivés du bois ou en matière plastique,
la machine contenant au moins une unité d'usinage (1) avec au moins un élément de réglage (2) réglable manuellement et
le procédé comportant les étapes suivantes :
- transmission d'une valeur de consigne de la position de l'élément de réglage (2) par un ordinateur principal (5) à un champ d'affichage (3),
- affichage de cette valeur de consigne ainsi que d'une valeur réelle de la position de l'élément de réglage (2) sur le champ d'affichage (3), et
- réglage manuel de l'élément de réglage (2) jusqu'à ce que la valeur réelle et la valeur de consigne coïncident,
**caractérisé en ce que** l'introduction de pièces dans la machine est empêchée par un dispositif de blocage et la machine n'est débloquée en vue de son fonctionnement que lorsque la valeur réelle de la position de l'élément de réglage (2) correspond à la valeur de consigne.

2. Procédé pour adapter une machine selon la revendication 1, selon lequel un signal est envoyé en sortie lorsque la valeur réelle de la position de l'élément de réglage (2) ne correspond pas à la valeur de consigne.

3. Procédé pour adapter une machine selon l'une des revendications 1 ou 2, selon lequel la valeur de consigne est transmise par l'ordinateur principal (5) au champ d'affichage (3) par l'intermédiaire d'une liaison sans fil (6).

4. Procédé pour adapter une machine selon l'une des revendications 1 à 3, la machine comportant plusieurs éléments de réglage (2) avec des champs d'affichage (3) associés et, pour l'adaptation de la machine, les valeurs de consigne destinées aux éléments de réglage (2) étant transmises aux champs d'affichage (3) où elles sont affichées.

5. Procédé pour adapter une machine selon l'une des revendications 1 à 4, des informations concernant un outil prévu dans l'unité d'usinage (1) étant aussi prises en compte par l'ordinateur principal (5) lors de la prescription des valeurs de consigne.

6. Machine adaptable, notamment machine-outil destinée à l'usinage de pièces qui sont de préférence au moins en partie en bois, en matériaux dérivés du bois ou en matière plastique,
la machine comportant au moins une unité d'usinage (1) avec au moins un élément de réglage (2) réglable manuellement,
un champ d'affichage étant prévu (3) pour afficher une valeur de consigne et une valeur réelle de la position de l'élément de réglage (2),
des moyens (6) existant en outre pour la transmission d'une valeur de consigne de la position de l'élément de réglage (2) par un ordinateur principal (5) au champ d'affichage (3) et
l'unité d'usinage comportant un réglage manuel (4) qui est destiné à l'élément de réglage (2) et au moyen duquel l'élément de réglage (2) peut être réglé jusqu'à ce que la valeur réelle et la valeur de consigne coïncident,
**caractérisée par** un dispositif de blocage (7) pour empêcher l'introduction de pièces dans la machine et par des moyens pour débloquer la machine en vue de son fonctionnement lorsque la valeur réelle de la position de l'élément de réglage (2) correspond à la valeur de consigne.

7. Machine adaptable selon la revendication 6, avec des moyens pour la sortie d'un signal lorsque la valeur réelle de la position de l'élément de réglage (2) ne correspond pas à la valeur de consigne.

8. Machine adaptable selon l'une des revendications 6 ou 7, qui dispose d'une liaison sans fil (6) entre ordinateur principal (5) et champ d'affichage (3) pour la transmission de la valeur de consigne.

9. Machine adaptable selon l'une des revendications 6 à 8, qui comporte plusieurs éléments de réglage (2) avec des champs d'affichage (3) associés et qui, pour adapter la machine, transmet les valeurs de consigne destinées aux éléments de réglage (2) aux champs d'affichage (3) respectifs où elle les affiche.
